(19) Europäisches Patentamt
European Patent Office
Office européen des brevets

(11) **EP 2 610 782 A1**

(12) **EUROPEAN PATENT APPLICATION**

(43) Date of publication:
**03.07.2013 Bulletin 2013/27**

(51) Int Cl.:
*G06K 9/00* (2006.01)   *G01C 21/28* (2006.01)
*G01C 21/34* (2006.01)   *G08G 1/0968* (2006.01)
*G01C 21/36* (2006.01)

(21) Application number: **12199471.9**

(22) Date of filing: **27.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.12.2011 IT TO20111215**

(71) Applicant: **Magneti Marelli S.p.A.**
**20011 Corbetta (MI) (IT)**

(72) Inventors:
• **Mortara, Pietro**
  **I-10020 BALDISSERO TORINESE (Torino) (IT)**
• **De Gennaro, Maria Carmela**
  **I-10138 TORINO (IT)**
• **Tosetto, Fabio**
  **I-10023 CHIERI (Torino) (IT)**

(74) Representative: **Fassio, Valeria et al**
**Jacobacci & Partners S.p.A.**
**Corso Emilia, 8**
**10152 Torino (IT)**

(54) **Method for planning the route of a vehicle**

(57)     Method for planning the route of a vehicle, said route comprising a plurality of successive road segments, the method comprising the steps of:
- providing a control unit (1) comprising an electronic horizon (2) including vehicle data (4) representing the vehicle and Traffic Sign Recognition data (6) representing objects which are present at the side of the road on which the vehicle is travelling, and which are automatically recognized by a TSR system of the vehicle;
- providing a graphic interface, connected to the control unit (1), by means of which a starting point and an arrival point of said route are defined;
- providing, within the control unit (1), a processing module (8) adapted to process the data of the electronic horizon (2), combining them with cartographic data from a map (10) connected to the control unit (1), thus obtaining processed data which represent the spatiotemporal position of the vehicle;
- providing, within the control unit (1), a weight modification module (12), connected to the processing module (8), and adapted to assign to each road segment a predetermined cost function based on said processed data;
- providing, within the control unit (1), a route planning module (16), connected to the weight modification module (12), and adapted to plan the route on the basis of said cost function, the starting and arrival points of the route, and the cartographic data;
the method being characterized in that:
- the electronic horizon (2) includes surrounding vehicle data (18) representing vehicles located within a predetermined distance from the vehicle, and infrastructure data (20) representing the road conditions of geographic areas of predetermined dimensions located around the route to be planned;
- the data processing step comprises the replacement of a data element present in the electronic horizon (2) with a new data element acquired from the control unit (1) in a successive instant of time, or the calculation of the weighted mean of the data of the electronic horizon (2) by combining them with new data acquired from the control unit (1);

in which the calculation of the weighted mean comprises the steps of:
- assigning to each data element of the electronic horizon (2) and to each new data element acquired from the control unit (1) a reliability coefficient ($\omega$), a standard deviation ($\sigma$), a first time factor (TL) indicating the time interval within which the data element is valid, and a second time factor (TF) indicating the speed of aging of the data element;
- calculating the weighted mean, thus obtaining a weighted data element, by means of the following equations:

**(Cont. next page)**

EP 2 610 782 A1

$$\bar{x} = \frac{\sum_{i=1}^{N} \frac{\theta_i * \lambda}{\sigma^2} * x_i}{\sum_{i=1}^{N} \frac{\theta_i * \lambda}{\sigma^2}}$$

$$\lambda = \begin{cases} \left(1 - \frac{t_1 - t_0}{TL}\right)^{TF} & t_1 - t_0 < TL \\ 0 & t_1 - t_0 > TL \end{cases}$$

where x is the data element, $\lambda$ is a variable which indicates the time decay and t0 and t1 indicate two successive instants of acquisition.

FIG. 1

**Description**

The present invention relates to a method for planning the route of a vehicle.

A method of this type is described in US 2007/0106465.

An electronic horizon is a spatiotemporal database contained in the electronic control unit of a vehicle, which is supplied with data obtained from outside the vehicle and represents the dynamic state of change of an area of territory around the vehicle.

At present, a database of this type contains information received from sensors on board the vehicle, as in the implementation called the LDM (Local Dynamic Map) system devised by Bosch, for which there is a European Union standardization project. Overall, the LDM system is composed of a database of at least four "layers" (data sets).

In particular, the first layer is a static navigation map (a set of data representing a map), in other words a cartographic map, containing information on the roads that can be travelled along, the associated speed limits, the number of lanes and the like, which is typically updated once a year or once every two years.

The second layer is an updating layer for updating static data which change at a faster rate than the cartographic map, for example data representing traffic signs.

The third layer is a layer of geographic data obtained from external infrastructures, such as information relating to the traffic status, temporary diversions due to roadworks or construction in progress, and local weather conditions.

The fourth layer is a dynamic layer containing real time data obtained from sensors on board the vehicle, such as ADAS and RADAR systems and vision systems.

There are also known communications systems of the vehicle-to-vehicle and vehicle-to-infrastructure type, which communicate information on the traffic status, road conditions and the like to vehicles.

The electronic horizon is created by using the data present in the four layers of the database and extrapolating from these the information which is useful for the vehicle, on the basis of its current position and direction. The use of the electronic horizon data depends on the specific application, such as a navigation application (route updating), a safety application (alarm signalling for maintaining a safe distance without using radar or more complex vision systems) or fuel economy applications (with driver assistance information matched more closely to a given route, including for example the calculation of the optimal speed to be maintained in a route requiring transit through successive intersections controlled by traffic lights).

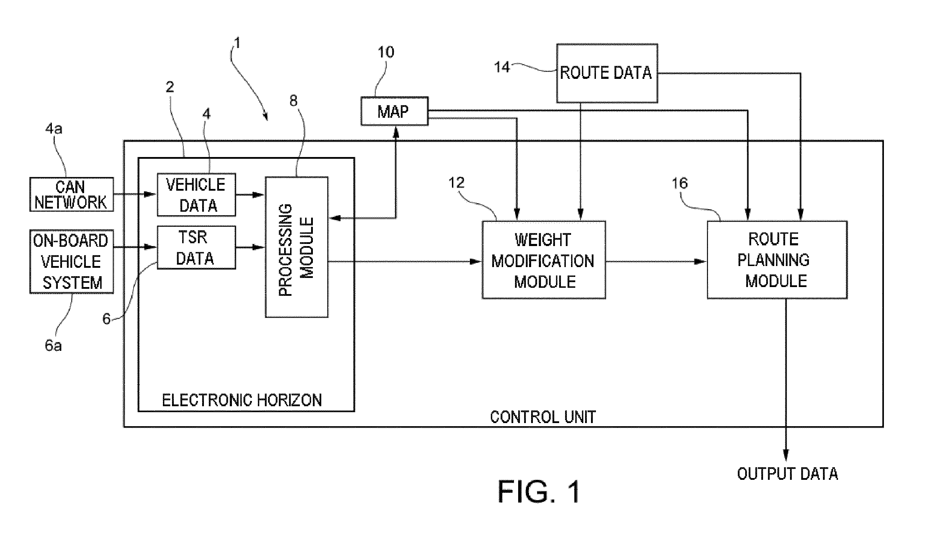

Figure 1 shows a block diagram of a vehicle control unit 1, arranged to acquire the necessary data to create an electronic horizon database and analyse it for the purpose of dynamic planning of the route.

The route to be planned is defined by a starting point and an arrival point selected by the user and communicated in a known way to the control unit 1, through a graphic interface which is provided on board the vehicle and is connected to said control unit 1. The route to be planned comprises a plurality of successive road segments.

The control unit 1 comprises an electronic horizon database 2 including vehicle data 4, obtained for example, in a known way, from a CAN network 4a of the vehicle, and TSR (Traffic Sign Recognition) data 6 obtained from the on-board vehicle system 6a.

The vehicle data 4 include, for example, travel speed, vehicle dimensions, acceleration, status of the direction indicators, gear engaged, and engine speed.

The TSR data 6 include objects such as traffic signs which are present at the side of the road on which the vehicle is travelling, and which are automatically recognized by a TSR system of the vehicle. This system is a basic part of ADAS (Advanced Driver Assistance Systems), which are systems adapted to assist the driver in the interests of road safety. The control unit 1 is arranged to acquire, in successive instants of time, new data to be input into the modules 4 and 6.

These data are sent to a processing module (or "data fusion") module 8, adapted to carry out the fusion of these data in a known way, by combining them with cartographic data (representing the data from the first, second and third layers described above) obtained from a map 10.

The data from the processing module 8, taken in combination, represent the spatiotemporal location of the vehicle.

The processed data from the processing module 8 are sent to a weight modification module 12, together with the cartographic data and travel data obtained from a travel module 14. The travel module 14 is associated with the graphic interface, and the travel data represent the starting and arrival points of the desired route.

The weight modification module 12 is arranged to assign and/or modify weight coefficients associated with road segments which can be selected for route planning, and to send said weights to a route planning module 16.

In particular, the weight modification module 12 modifies the cost (in terms of time) of transit along a predetermined road segment on the basis of the starting and arrival points of the desired route. This is because updating the cost of all the roads present on the map would be an extremely costly operation, whereas it is much more efficient to update only the cost of the roads adjacent to the route to be planned.

The weight modification module 12 modifies, in a known way, the weight/cost of each road segment on the basis of the output results of the processing module 8. For example, if the output data from the processing module 8 indicate that the vehicle is at a point such that there is an accident in the next road segment, the weight modification module 12 assigns a very high weight to this road segment (for example, on a numeric scale from 1 to 10, it assigns a value of 8 to this road segment), in such a way that the route planning module 16 which subsequently plans the route does not cause the vehicle to travel along this road segment.

On the basis of the received weights, the travel data and the cartographic data, and advantageously also on the basis of data representing the type of route desired by the user, obtained from the graphic interface, the route planning module 16 plans, in a known way, the route to be followed by the vehicle, and produces output data which are sent to the on-board vehicle system.

The on-board vehicle system uses these output data to execute the applications described above.

The main problems associated with this technology arise from the fact that the electronic horizon data are not sufficiently accurate, since they take only the vehicle itself into consideration.

Furthermore, the processing module 8 and weight modification module 12 do not operate in a sufficiently effective way to get optimized output data which would enable the route to be planned in the best way for the vehicle.

Object of the present invention is therefore to propose a method for planning the route of a vehicle which enables the route of a vehicle to be planned in a more accurate way.

This and other objects are achieved with a vehicle route planning method whose characteristics are specified in Claim 1.

Specific embodiments are described in the dependent claims, the content of which is to be considered as an integral and essential part of the present description.

Other characteristics and advantages of the invention will become clear from the following detailed description, which is given purely by way of non-limiting example with reference to the attached drawings, in which:

- Figure 1 is a block diagram of a control unit of a vehicle for carrying out route planning according to the prior art; and
- Figure 2 is a block diagram of a vehicle control unit for carrying out route planning according to the present invention.

Briefly, the invention is based on technical solutions which solve the problem of data communication for an optimal implementation of the data representation technology for the purposes of the application.

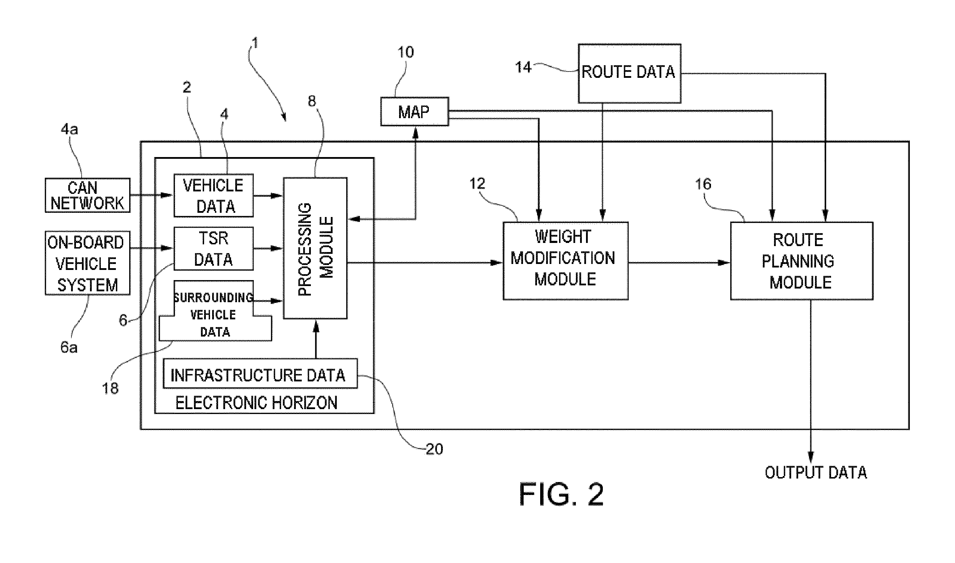

Figure 2 is a block diagram of a vehicle control unit for carrying out route planning according to the present invention, in which elements similar to those described above with reference to Figure 1 have the same references.

In addition to the vehicle data 4 and the TSR data 6, the electronic horizon 2 includes surrounding vehicle data 18 and infrastructure data 20.

The surrounding vehicle data 18 contain information on vehicles surrounding the vehicle containing the electronic horizon 2 and are transmitted according to the 802.11P protocol within a radius of about 500 m. Preferably, surrounding vehicles are considered to be vehicles located within a predetermined distance from the vehicle in question, for example 200 m.

The infrastructure data 20 contain information obtained from remote stations such as toll booths, police stations, traffic control stations and the like, and are also transmitted according to the 802.11P protocol within a radius of about 500 m. Preferably, the infrastructure data are data representing the road conditions of geographic areas of predetermined dimensions located around the route to be planned, for example geographic areas measuring 20 $km^2$.

The surrounding vehicle data 18 include, for example, travel speed, vehicle dimensions, acceleration, status of the direction indicators, gear engaged, and engine speed.

The infrastructure data 20 include, for example, the traffic status, the traffic signs, the road speed limits, the presence of construction yards or accidents, the traffic conditions, and the traffic light status.

The control unit 1 is arranged to acquire, in successive instants of time, new data to be input into the modules 4, 6, 18 and 20, the new data replacing the existing data or being combined with them, as described below.

The data in the modules 4, 6, 18 and 20 contain information, all of which will be processed as described below so as to modify in real time the cost of transit for various road segments, and consequently the route planned by the navigation application, the best route being suggested to the end user even in the presence of initially unknown critical situations, such as congestion or roads closed because of roadworks.

The processing module 8 applies an algorithm for the fusion of the data (described below) obtained from various sources, these data being combined to provide the same final information supplied to the weight modification module 12.

The purpose of the data fusion algorithm is to find a unique output data element which is as reliable as possible, by weighting the received data in a suitable way so as to maximize their reliability.

The processing module 8 is arranged to execute a series of processes which normally have a "waiting" status. Each process has the task of controlling and analysing the data relating to a specific piece of information (for example, a process may have the task of calculating the most probable speed limit). For each individual piece of information, the processing module 8 has different sources (modules 4, 6, 18 and 20) from which the data for examination are received.

The process associated with a given piece of information therefore has the task of "waking up" as soon as a new data element is available, evaluating the data element, and then updating the information, as described below.

In particular, the data in the modules 4, 6, 18 and 20 are processed in different ways, depending on whether the data are from secure sources (such as certified remote stations) or from sources subject to error (such as surrounding vehicles).

A minimum threshold level of reliability is defined, which the data element must reach in order to be accepted.

Data from secure sources have a reliability which always exceeds the minimum threshold of reliability, and therefore the control unit 1 inputs the new data from these sources into the electronic horizon 2 in successive instants of time, replacing the existing data with these new data.

If a plurality of different sources supply the same type of data (such as speed limits), they must, obviously, supply compatible data, since they are secure sources by definition. Advantageously, a main data source is defined, this source taking priority if there is any conflict of data.

In the case of data from sources subject to error, each individual data element x (data present in the electronic horizon 2 or new data acquired by the control unit 1) is associated with a reliability coefficient $\omega$.

The processing module 8 selects only those data, out of those obtained from sources subject to error, whose reliability coefficient $\omega$ exceeds the minimum threshold of reliability.

The most probable information is then obtained by calculating the weighted mean of the data in the electronic horizon 2, which are combined with new data which are acquired by the control unit 1 in successive instants of time, the new data being weighted in accordance with their own reliability coefficients.

In particular, there are N values $x_1$, $x_2$,...$x_N$ (representing the data of modules 4, 6, 18 and 20), each characterized by a reliability $\omega_i$ and a standard deviation $\sigma_i$. Each value $x_i$ is received at the time $t_i$.

The information relating to the data in modules 4, 6, 18 and 20 is also characterized by a first time factor TL which indicates the time interval (specified in advance) in which the data element is considered valid, this interval being a whole number. This is because, in an environment which changes dynamically in time such as that in which the electronic horizon 2 is located, it is essential to allow for changes over time.

Finally, it should be noted that the effect of time varies considerably with the type of information: for example, the more recent traffic information must rapidly replace the older information, whereas data relating to the presence of a construction yard are valid even if they are old.

It is therefore necessary to determine the nature of the "decay" of the information within the time interval of validity TL, in other words the speed of ageing of the data element in question.

Finally, therefore, the information relating to the data of modules 4, 6, 18 and 20 is characterized by a second time factor TF in the range [0,1], specified in advance, which depends on the relative time for which the information is valid. For example, roadworks in progress or other information with a duration of several days have a value close to zero; accidents, traffic or other information with a duration of a few minutes or hours have a value close to one.

The processing module 8 therefore executes the fusion of the data (those for which the direct replacement described above has not been carried out), using, for each module 4, 6, 18 and 20, only the data which have been obtained from sources subject to error, and which have been selected on the basis of their reliability coefficient $\omega$:

$$\overline{x} = \frac{\sum_{i=1}^{N} \frac{\omega_i \cdot \lambda}{\sigma_i^2} \cdot x_i}{\sum_{i=1}^{N} \frac{\omega_i \cdot \lambda}{\sigma_i^2}}$$

$$\lambda = \begin{cases} \left(1 - \dfrac{t_1 - t_0}{TL}\right)^{TF} & t_1 - t_0 < TL \\ 0 & t_1 - t_0 > TL \end{cases}$$

where $\lambda$ is a variable indicating the time decay (as $\lambda$ approaches zero, the old data are increasingly forgotten by the control unit 1), and $t_0$ and $t_1$ indicate two successive instants of acquisition.

If, in the i-th step of the algorithm (a predetermined instant of time), there is a value already expressed as a mean which must be updated dynamically with a new value, it will simply be necessary to use the following three formulae:

$$\lambda = \left(1 - \frac{t_{i+1} - t_i}{TL}\right)^{TF}$$

$$\overline{x}_{i+1} = \frac{(\overline{x}_i * \omega_i * \lambda) + \frac{x_{i+1} * \omega_{i+1}}{\sigma_i^2}}{\omega_i * \lambda + \frac{\omega_{i+1}}{\sigma_i^2}}$$

$$\omega_{i+1} = \omega_i * \lambda + \frac{\omega_1}{\sigma_i^2}$$

At the end of the operations described above, data expressed as means are obtained and are used, in place of the initial data of modules 4, 6, 18 and 20 which were used to calculate said weighted means, for the subsequent operations.

There are also certain data, obtained from sources subject to error, for which the weighted means cannot be calculated (for example, speed limits). If, for example, a data source supplies a first value for the speed limit of a predetermined road segment (for example, 30 km/h) and a second data source supplies a second value for the speed limit (for example, 70 km/h), it is meaningless to deduce that the most probable speed limit is the mean of these first and second values. In this case, it is decided that the speed limit is that obtained from the most reliable data source.

A maximum validity time TL is then defined, relating to the validity of a certain data element: if the information related to this data element becomes too old, it is replaced (in the electronic horizon 2) with the new data element, even if the reliability of the latter is lower.

In particular, a check is made to determine whether the received data element is temporally reliable (in other words, whether the time interval $\Delta t$ between the last data element received and the current data element is less than the maximum validity time TL), and whether its reliability is above the minimum threshold of reliability. If this is the case, the new data element acquired by the control unit 1 replaces the preceding one in the corresponding module 4, 6, 18 or 20.

However, if the data element is not temporally reliable, the control unit 1 replaces the preceding data element with the new one regardless of the reliability of the new data element.

At this point, the new data of the modules 4, 6, 18 and 20 resulting from the direct replacements described above (the replacement of the data from secure sources or the replacement of the data from sources subject to error for which the weighted mean cannot be calculated) and the data expressed as means, calculated by the processing module 8, are sent by the processing module 8 to the weight modification module 12, which assigns a weight/cost to each individual road segment, as described below.

Thus the processing module 8 transfers the new data obtained by the aforesaid direct replacements, or the data expressed as means, according to availability, directly to the weight modification module 12.

At this point, the weights are sent to the route planning module 16, which calculates the shortest route for travelling from one place to another.

The route planning module 16 uses, for example, a variant of the Dijkstra algorithm in which, in a known way, a route is divided into a plurality of successive arcs (individual road segments) with which are associated costs (or weights) which are specified cost functions for transit along an arc (the transit time, for example). In the Dijkstra algorithm, the cost function associated with each arc is proportional to the type of road (motorway, urban segment, or other) and to its length.

Advantageously, the route planning module 16 of the present invention uses cost functions modified, as described below, on the basis of the traffic, the presence of accidents or construction yards or current roadworks, the number of lanes in the segment, and the like. This information, not included in the map 10 since its temporal validity is too limited, is acquired by the electronic horizon 2 and is used to update, in real time, the costs associated with the arcs of the map, thus making it possible to modify the planned route.

Recapitulating, each data element obtained from the modules 4, 6, 18 and 20 is subjected to the data fusion algorithm or direct replacement, so as to provide a single data element for each type at each sampling instant. This is because it is essential to have not more than one piece of information on the traffic status, the presence of construction yards or accidents, or the like, for each arc.

The reliability of each individual data element is taken into consideration before the data fusion algorithm (or direct replacement) is executed: in particular, if the electronic horizon 2 contains, in modules 4, 6, 18 and 20, a certain data element relating to an arc and obtained from a plurality of sources, the element having the greatest reliability is considered (data are ranked in decreasing order of reliability, starting with those obtained from secure sources, followed by those obtained from sources subject to error for which the mean can be calculated, and ending with those obtained from sources subject to error for which the mean cannot be calculated).

At this point, the data which are initially used by the processing module 8 and are then sent, after processing, to the weight modification module 12, are all equally reliable, since they have exceeded the minimum threshold of reliability and are the most reliable data available at a predetermined time instant T.

The cost functions are then modified as follows:

$$cost = \frac{traffic*length*accident*yard}{speed*lanes}$$

where
*traffic = traffic_factor*traffic_coeff,* in which *traffic_factor* is a factor indicating the traffic (data present in module 20) and *traffic_coeff* is a predetermined weight associated with the *traffic_factor* factor;
*length* is the length of the arc (road segment);
*accident = accident_factor*accident_coeff*, in which *accident_factor* is a factor representing accidents (data present in module 20) and *accident_coeff* is a predetermined weight associated with the *accident_factor* factor;
*yard = yard_factor*yard_coeff*, in which *yard_factor* is a factor representing construction yards (data present in module 20) and *yard_coeff* is a predetermined weight associated with the *yard_factor* factor;
*lanes = lanes_number*lanes_coeff*, in which *lanes_number* is the number of lanes (data present in module 20) and *lanes_coeff* is a predetermined weight associated with the *lanes_number* factor;
*speed = speed_limit*agv_speed*, in which *speed_limit* is a factor which represents the speed limit (data present in module 20) and *agv_speed* is a predetermined factor, in the range from 0 to 1, for determining the mean travel speed for the road segments.

When the costs associated with each individual arc have been updated, the weight modification module 12 sends the modified costs to the planning module 16, which applies the Dijkstra algorithm to plan the best route.

Advantageously, the updating is carried out only for those arcs which are located within a predetermined distance, for example 50 km, from the route to be planned. For example, if a route from Turin to Milan is being planned, the traffic status for Rome is not updated, since it will have no effect at all on the segment under consideration. Therefore, the route is re-planned only if there are updates available for the road segments close to the currently planned route.

Because of this aspect of the invention it is possible to make savings in respect of a large number of the resources of the control unit 1, such as the memory, the processing cycles, and the like.

The Dijkstra algorithm is therefore executed only if there are useful updates present, and after the analysis of all the updates received.

Clearly, provided that the principle of the invention is retained, the forms of application and the details of embodiment can be varied widely from what has been described and illustrated purely by way of non-limiting example, without thereby departing from the scope of the invention as defined in the attached claims.

**Claims**

1. Method for planning the route of a vehicle, said route comprising a plurality of successive road segments, the method comprising the steps of:

    - providing a control unit (1) comprising an electronic horizon (2) including vehicle data (4) representing the vehicle and Traffic Sign Recognition data (6) representing objects which are present at the side of the road on which the vehicle is travelling, and which are automatically recognized by a TSR system of the vehicle;
    - providing a graphic interface, connected to the control unit (1), by means of which a starting point and an arrival point of said route are defined;
- providing, within the control unit (1), a processing module (8) adapted to process the data of the electronic horizon (2), combining them with cartographic data from a map (10) connected to the control unit (1), thus obtaining processed data which represent the spatiotemporal position of the vehicle;
- providing, within the control unit (1), a weight modification module (12), connected to the processing module (8), and adapted to assign to each road segment a predetermined cost function based on said processed data;
- providing, within the control unit (1), a route planning module (16), connected to the weight modification module (12), and adapted to plan the route on the basis of said cost function, the starting and arrival points of the route, and the cartographic data;

the method being **characterized in that**:
- the electronic horizon (2) includes surrounding vehicle data (18) representing vehicles located within a predetermined distance from the vehicle, and infrastructure data (20) representing the road conditions of geographic areas of predetermined dimensions located around the route to be planned;
- the data processing step comprises the replacement of a data element present in the electronic horizon (2) with a new data element acquired from the control unit (1) in a successive instant of time, or the calculation of the weighted mean of the data of the electronic horizon (2) by combining them with new data acquired from the control unit (1);

in which the calculation of the weighted mean comprises the steps of:
- assigning to each data element of the electronic horizon (2) and to each new data element acquired from the control unit (1) a reliability coefficient ($\omega$), a standard deviation ($\sigma$), a first time factor (TL) indicating the time interval within which the data element is valid, and a second time factor (TF) indicating the speed of aging of the data element;
- calculating the weighted mean, thus obtaining a weighted data element, by means of the following equations:

$$\overline{x} = \frac{\sum_{i=1}^{N} \frac{\omega_i \cdot \lambda}{\sigma^2} \ast x_i}{\sum_{i=1}^{N} \frac{\omega_i \cdot \lambda}{\sigma^2}}$$

$$\lambda = \begin{cases} \left(1 - \frac{t_1 - t_0}{TL}\right)^{TF} & t_1 - t_0 < TL \\ 0 & t_1 - t_0 > TL \end{cases}$$

where x is the data element, $\lambda$ is a variable which indicates the time decay, and t0 and t1 indicate two successive instants of acquisition.

2. Method according to Claim 1, in which a mean data element already exists at a predetermined instant of time, and in which said data element is updated by means of the following equations:

$$\lambda = \left(1 - \frac{t_{i+1} - t_i}{TL}\right)^{TF}$$

$$\overline{x}_{i+1} = \frac{(\overline{x}_i \ast \omega_i \ast \lambda) + \frac{x_{i+1} \ast \omega_{i+1}}{\sigma^2}}{\omega_i \ast \lambda + \frac{\omega_{i+1}}{\sigma^2}}$$

$$\omega_{i+1} = \omega_i * \lambda + \frac{\omega_1}{\sigma^2}$$

in which the subscripts i and i+1 indicate, respectively, the predetermined instant of time and a successive instant of time.

3.  Method according to Claim 1 or 2, in which the predetermined cost function is the following:

$$cost = \frac{traffic*length*accident*yard}{speed*lanes}$$

where
traffic = traffic_factor*traffic_coeff, in which traffic_factor is a factor indicating the traffic state and traffic_coeffis a predetermined weight associated with the traffic_factor factor; length: is the length of the portion of the road;
accident = accident_factor*accident_coeff, in which accident_factor is a factor indicating accidents and accident_ coeff is a predetermined weight associated with the accident_factor factor;
yard = yard_factor*yard_coeff, in which yard_factor is a factor indicating the presence of construction yards and yard_coeff is a predetermined weight associated with the yard_factor factor;
lanes = lanes_number*lanes_coeff, in which lanes_number is a number of lanes of the road segment and lanes_ coeff is a predetermined weight associated with the lanes_number factor;
speed = speed_limit*agv_speed, in which speed_limit is a factor which represents the speed limit and agv_speed is a predetermined factor indicating the mean travel speed for the road segment.

4.  Method according to any of the preceding claims, in which the surrounding vehicle data (18) comprise travel speed, vehicle dimensions, acceleration, status of the direction indicators, gear engaged, and engine speed.

5.  Method according to any of the preceding claims, in which the infrastructure data (20) comprise the traffic status, the traffic signs, the road speed limits, the presence of construction yards or accidents, the traffic conditions, and the traffic light status.

FIG. 1

FIG. 2

Europäisches Patentamt

European Patent Office

Office européen des brevets

## EUROPEAN SEARCH REPORT

Application Number

EP 12 19 9471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2007/106465 A1 (ADAM THOMAS B W [GB] ET AL) 10 May 2007 (2007-05-10)<br>* claim 1 *<br>* paragraphs [0002], [0015] - [0017], [0021], [0022], [0024] - [0026], [0035] - [0037], [0097], [0131], [0150] *<br>----- | 1-5 | INV.<br>G06K9/00<br>G01C21/28<br>G01C21/34<br>G08G1/0968<br>G01C21/36 |
| A | US 2010/100268 A1 (ZHANG WENDE [US] ET AL) 22 April 2010 (2010-04-22)<br>* paragraphs [0006], [0009], [0035], [0106] - [0108] *<br>----- | 1-5 | |
| A | US 6 560 529 B1 (JANSSEN HOLGER [DE]) 6 May 2003 (2003-05-06)<br>* the whole document *<br>----- | 1-5 | |
| A | US 2009/169055 A1 (ISHIKAWA TOMOAKI [JP]) 2 July 2009 (2009-07-02)<br>* claim 1; figure 1 *<br>----- | 1-5 | |
| A | DE 199 38 267 A1 (VOLKSWAGEN AG [DE]) 15 February 2001 (2001-02-15)<br>* column 1, line 27 - line 35 *<br>* column 3, line 67 - column 4, line 5 *<br>* figure 1 *<br>----- | 1-5 | TECHNICAL FIELDS SEARCHED (IPC)<br><br>G06K<br>G01C<br>G08G |
| A | CHRISTIAN WEI: "V2X communication in Europe From research projects towards standardization and field testing of vehicle communication technology", COMPUTER NETWORKS, vol. 55, no. 14, 1 May 2011 (2011-05-01), pages 3103-3119, XP028284615, ISSN: 1389-1286, DOI: 10.1016/J.COMNET.2011.03.016 [retrieved on 2011-05-01]<br>* the whole document *<br>----- | 1-5 | |

-/--

The present search report has been drawn up for all claims

| Place of search | Date of completion of the search | Examiner |
|---|---|---|
| The Hague | 4 March 2013 | Rocca, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 610 782 A1**

Europäisches
Patentamt

European
Patent Office

Office européen
des brevets

**EUROPEAN SEARCH REPORT**

Application Number

EP 12 19 9471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAMID MENOUAR ET AL: "Efficient and unique identifier for V2X events aggregation in the Local Dynamic Map", ITS TELECOMMUNICATIONS (ITST), 2011 11TH INTERNATIONAL CONFERENCE ON, IEEE, 23 August 2011 (2011-08-23), pages 369-374, XP032064682, DOI: 10.1109/ITST.2011.6060084 ISBN: 978-1-61284-668-2 * the whole document * ----- | 1-5 | |
| | | | TECHNICAL FIELDS SEARCHED (IPC) |

The present search report has been drawn up for all claims

| Place of search | Date of completion of the search | Examiner |
|---|---|---|
| The Hague | 4 March 2013 | Rocca, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.                    EP 12 19 9471

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2013

| Patent document cited in search report | | Publication date | Patent family member(s) | | Publication date |
|---|---|---|---|---|---|
| US 2007106465 | A1 | 10-05-2007 | AU 2006300938 A1 | | 19-04-2007 |
| | | | BR PI0614492 A2 | | 29-03-2011 |
| | | | CA 2617388 A1 | | 19-04-2007 |
| | | | CN 101253388 A | | 27-08-2008 |
| | | | CN 102297700 A | | 28-12-2011 |
| | | | EP 1934557 A1 | | 25-06-2008 |
| | | | GB 2431261 A | | 18-04-2007 |
| | | | JP 2009513951 A | | 02-04-2009 |
| | | | KR 20080059373 A | | 27-06-2008 |
| | | | US 2007106465 A1 | | 10-05-2007 |
| | | | WO 2007042796 A1 | | 19-04-2007 |
| | | | ZA 200800895 A | | 26-08-2009 |
| US 2010100268 | A1 | 22-04-2010 | CN 101944176 A | | 12-01-2011 |
| | | | DE 102009050501 A1 | | 23-12-2010 |
| | | | US 2010100268 A1 | | 22-04-2010 |
| US 6560529 | B1 | 06-05-2003 | DE 19842176 A1 | | 16-03-2000 |
| | | | EP 1114371 A1 | | 11-07-2001 |
| | | | JP 2002525712 A | | 13-08-2002 |
| | | | US 6560529 B1 | | 06-05-2003 |
| | | | WO 0016214 A1 | | 23-03-2000 |
| US 2009169055 | A1 | 02-07-2009 | CN 101469998 A | | 01-07-2009 |
| | | | EP 2113746 A1 | | 04-11-2009 |
| | | | JP 4831434 B2 | | 07-12-2011 |
| | | | JP 2009156784 A | | 16-07-2009 |
| | | | US 2009169055 A1 | | 02-07-2009 |
| DE 19938267 | A1 | 15-02-2001 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070106465 A